(19) Europäisches Patentamt

European Patent Office

Office européen des brevets

(11) Veröffentlichungsnummer: **0 342 192 B1**

(12) **EUROPÄISCHE PATENTSCHRIFT**

(45) Veröffentlichungstag der Patentschrift: **14.11.90**

(51) Int. Cl.⁵: **G 01 L 1/24**

(21) Anmeldenummer: **88900815.7**

(22) Anmeldetag: **20.01.88**

(86) Internationale Anmeldenummer: **PCT/DE88/00026**

(87) Internationale Veröffentlichungsnummer: **WO 88/05529 28.07.88 Gazette 88/17**

(54) **OPTISCHER KRAFTMESS-SENSOR.**

(30) Priorität: **21.01.87 DE 3701632**
**21.01.87 DE 3701548**

(43) Veröffentlichungstag der Anmeldung:
**23.11.89 Patentblatt 89/47**

(45) Bekanntmachung des Hinweises auf die
Patenterteilung:
**14.11.90 Patentblatt 90/46**

(84) Benannte Vertragsstaaten:
**AT BE CH DE FR GB IT LI NL**

(56) Entgegenhaltungen:
**EP-A-0 144 509**
**WO-A-86/05273**
**DE-A-2 521 659**

**First International Conference on Optical Fibre Sensors, 26.-28. April 1983, S.C. Raleigh: "Polarimetric sensors: exploiting the axial stress in high birefringence fibers", Seiten 210-213**

(73) Patentinhaber: **Pfister GmbH**
**Stätzlinger Strasse 70**
**D-8900 Augsburg (DE)**

(72) Erfinder: **HÄFNER, Hans, W.**
**Fichtenweg 15**
**D-8890 Aichach-Walchshofen (DE)**

(74) Vertreter: **Kahler, Kurt, Dipl.-Ing.**
**Patentanwälte Kahler & Käck Gerberstrasse 3**
**Postfach 1249**
**D-8948 Mindelheim (DE)**

**Beschreibung**

Die Erfindung betrifft einen Kraftmeßsensor mit einem faserförmigen Lichtwellenleiter, der in einer Schicht aus druck-oder kraftübertragendem Material eingebettet ist und unter dem Einfluß einer Kraft oder eines Druckes seine Lichtübertragungseigenschaften ändert, wobei diese Änderungen zur Messung der Kraft oder des Druckes herangezogen wird, sowie ein zugehöriges Herstellungsverfahren.

Ein derartiger Kraftmeßsensor ist aus der WO-A-86 05 273 bekannt, wobei der Lichtwellenleiter in einem elastomeren Material, insbesondere Silikon oder Polyurethan eingebettet ist und dadurch auf einem elastisch verformbaren Meßkörper, insbesondere Meßzungen befestigt ist. Weiterhin werden Abdeckungen des Lichtwellenleiters durch elastisches Material wie Neopren oder Kunst- und Naturfasern beschrieben. Durch diese elastische Krafteinleitung bzw. Kraftweiterleitung auf den Lichtwellenleiter durch die Einbettung in elastisches Material kann die zu messende Kraft nicht proportional erfaßt werden, so daß sich eine beträchtliche Meßungenauigkeit gibt. Zudem sind die beschriebenen Kraftmeßsensoren trotz zusätzlicher elastischer Schutzfolien aus Neopren oder aufgeklebten Kunstfasern empfindlich gegen mechanischen oder chemischen Einflüssen. Durch die Einbettung in Silikon in einem ersten Herstellungsschritt und dem zusätzlichen Aufkleben von Schutzfolien leidet die Haftfestigkeit der Einzelteile untereinander und macht eine Vielzahl von Herstellungsschritten notwendig, die die Herstellung entsprechend verteuern.

Aus der EP-A-0144509 ist weiterhin bekannt, einen Lichtwellenleiter bzw. einen Referenzlichtwellenleiter in einem Interferometer einzufügen. Dabei wird auch die Einbettung des Lichtwellenleiters in glasförmigen Material beschrieben, jedoch über eine Befestigung einer derartigen Glasschicht an einem elastisch verformbaren Meßkörper nichts ausgesagt, sondern lediglich beschrieben, daß ein Rechteckrohr aus zwei flachen Glasstreifen zusammengebaut wird, wobei seitliche Glasfasern als Abstandshalter dienen und an die flachen Glasstreifen angeschmolzen werden, um die seitlichen Kanten abzudichten. Eine derartige Herstellung ist sehr aufwendig, da eine Vielzahl von extrem kleinen Teilen zusammengefügt werden.

Aus dem Tagungsbericht der "First International Conference On Optical Fibres Sensors", 26. bis 28. April 1983, Seite 210 bis 213 (S. C. Rashleigh) ist weiterhin bekannt bei Kraftmeßsensoren Lichtwellenleiter ein- oder mehrlagig um einen zylinderförmigen Meßkörper zu wickeln. Über die Art der Befestigung des Lichtwellenleiters an dem Meßkörper werden keine weiteren Angaben gemacht.

Aus der DE-A-2521659 ist weiterhin ein mehrschichtiges Ubertragungselement bekannt, wobei eine Kernfaser von mehreren Mantelfasern umwickelt ist. Dieses Übertragungselement dient der Signalübertragung über mehrere Kilometer und ist als Kraftmeßsensor weder ausgelegt, noch geeignet.

In dem Aufsatz "Faseroptische Sensoren", R. Kist, in der Zeitschrift "Technisches Messen", Juni 1984, werden verschiedene Anwendungsmöglichkeiten von faserartigen Lichtwellenleitern in der Meßtechnik beschrieben und es wird auf die Vorteile derartiger faseroptischer Sensoren näher eingegangen. Hervorzuheben sind dabei die außerordentlich hohe Auflösung, der einfache Aufbau auf Grund des Wegfalls von Wandlern und die unmittelbar mögliche digitale Erfassung und Verarbeitung der gemessenen Signale.

Die bisherige Entwicklungen beschränken sich jedoch wegen der schwierigen Herstellung im wesentlichen noch auf Laboruntersuchungen. So ist aus der DE-PS 35 41 733 bekannt, eine Faser metallisch zu ummanteln und auf einem Meßkörper durch Schweißen oder galvanisches Einbetten zu fixieren. Die Haftfestigkeit und Temperaturbeständigkeit einer solchen Verbindungstechnik ist nicht unkritisch, wie in der Druckschrift im einzelnen ausgeführt wird. Zudem ist die gesonderte Herstellung durch Galvanisieren, Schweißen usw. sehr aufwendig.

Der Erfindung liegt die Aufgabe zugrunde, einen faseroptischen Kraftmeßsensor zu schaffen, der bei hoher Meßgenauigkeit verhältnismäßig unempfindlich gegen äußere Einflüsse ist und äußerst einfach hergestellt werden kann, sowie ein Herstellungsverfahren hierzu anzugeben.

Der erfindungsgemäße Kraftmeßsensor besitzt die Merkmale des Patentanspruchs 1 und 2, sowie als Lichtwellenleiterkombination die Merkmale des Patentanspruchs 14. Die erfindungsgemäßen Verfahren zum Herstellen eines derartigen Kraftmeßsensors sind in den Patentansprüchen 15, 18 und 20 angegeben.

Durch die Abdeckung mit einer steifen, festanhaftenden Krafteinleitungsplatte bzw. die Einbettung des faserartigen Lichtwellenleiters in nichtkriechendes Material wie Glas wird dieser gegen mechanische und chemische Einflüsse gut geschützt. Da dieses Schichtmaterial Kräfte bzw. Druck vollständig auf den Lichtwellenleiter überträgt, ergibt sich eine verhältnismäßig hohe Meßgenauigkeit.

Bevorzugte Weiterbildungen des erfindungsgemäßen optischen Sensors sind in den abhängigen Ansprüchen gekennzeichnet.

Weitere Vorteile des erfindungsgemäßen optischen Sensors ergeben sich aus der nachfolgenden Beschreibung von Ausführungsbeispielen anhand der Zeichnung. Es zeigen

Fig. 1 eine schematische Darstellung zur Erläuterung des Prinzips des erfindungsgemäßen optischen Sensors,

Fig. 2 eine Draufsicht auf ein erstes Ausführungsbeispiel eines erfindungsgemäßen optischen Sensors,

Fig. 3 eine schematische Seitenansicht des optischen Sensors nach Fig. 2 im Schnitt,

Fig. 4 eine Draufsicht auf eine weitere Ausführungsform des erfindungsgemäßen Sensors,

Fig. 5 eine Seitenansicht des Sensors nach Fig. 4,

Fig. 6 ein Ausführungsbeispiel einer anderen Art von optischen Sensor gemäß der Erfindung im Schnitt,

Fig. 7 eine Draufsicht auf einen wesentlichen Teil des Sensors nach Fig. 6,

Fig. 8 eine gegenüber der Fig. 6 modifizierte Ausführung eines Sensors im Schnitt,

Fig. 9 einen Kraftmeßteppich mit optisch in Reihe geschalteten optischen Sensoren,

Fig. 10 eine bevorzugte Lichtwellenleiterkombination,

Fig. 11 ein Zweistrahl-Interferometer nach Mach-Zehnder in einer anderen Ausführungsform,

Fig. 12a bis 12k verschiedene Ausführungsformen von optischen Kraftmeßsensoren, bei denen die Lichtwellenleiter auf den verschiedensten elastisch verformbaren Körpern aufgebracht sind, und

Fig. 13a, 13b spezielle Ausführungsformen eines optischen Kraftmeßsensors in zwei Seitenansichten.

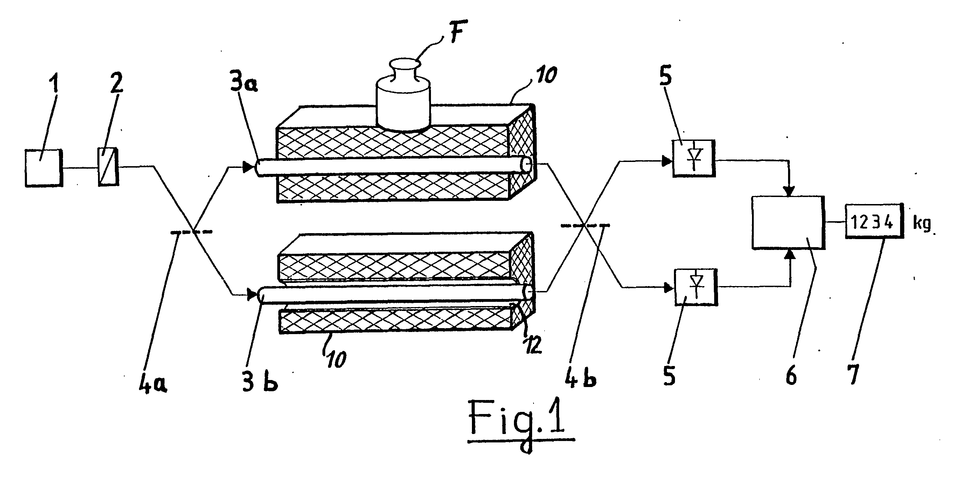

In Fig. 1 ist beispielsweise das Prinzip eines erfindungsgemäßen optischen Sensors dargestellt, der als sogenannter Mach-Zehnder-Sensor arbeitet.

Von einer monochromatischen Lichtquelle 1, etwa einer Laserdiode wird Licht über einen Polarisator 2 an einen Koppler 4a angelegt, der das Licht auf einen Meßlichtwellenleiter 3a und einen Referenzlichtwellenleiter 3b aufteilt. Das aus den beiden Lichtwellenleitern 3a, 3b austretende Licht wird an einen weiteren Koppler 4b angelegt, in fotoelektrischen Elementen 5 detektiert, deren elektrischen Ausgangssignale in einem Prozessor 6 zu einem Ausgangswert verarbeitet werden, der in einer Anzeige 7 zur Anzeige kommt.

Das bisher beschriebene Prinzip ist bekannt, ebenso wie die Einbettung des Meßlichtwellenleiters 3a in einem kraftübertragenden Material 10, bevorzugt elastomeres Material, das eine Kraft F im wesentlichen vollständig auf den Meßlichtwellenleiter 3a überträgt. Ferner wird der Referenzlichtwellenleiter 3b frei von dem Einfluß der Kraft F angeordnet. Er kann dabei in einem Hohlraum 12 des Materials 10 geführt sein; alternativ dazu besteht auch die Möglichkeit, den Referenzlichtwellenleiter 3b zur Temperaturkompensation außerhalb des elastomeren Materials 10 in der Nähe desselben anzubringen.

Das in Fig. 1 dargestellte Meßprinzip ist das eines Zweistrahlinterferometers, wobei bei dem Mach-Zehnder-Interferometer die durch die Kraft F im Meßlichtwellenleiter 3a bewirkte Phasenverschiebung gegenüber dem Licht im Referenzlichtwellenleiter 3b zur Messung herangezogen wird. Unter dem Einfluß der Kraft F verändert sich nämlich bei allseitigem Druck des elastomeren Materials 10 auf den Meßlichtwellenleiter 3a dessen Brechzahl n, was zu einer entsprechenden Phasenverschiebung führt. Eine andere Änderung der Lichtübertragungseigenschaften des Meßlichtwellenleiters 3a wäre eine Längenänderung auf Grund der Kraft F oder eine Durchbiegung.

Das in Fig. 1 dargestellte Prinzip des Zweistrahl-Interferometers nach Mach-Zehnder ist nur ein Beispiel für den Einsatz eines einwelligen Lichtwellenleiters. Andere Möglichkeiten sind in den genannten Veröffentlichungen beschrieben, einschließlich der Anwendung von vielwelligen Lichtwellenleitern.

Wesentlich für die Erfindung ist die Art und Weise, wie die Lichtwellenleiter vorteilhaft untergebracht sind.

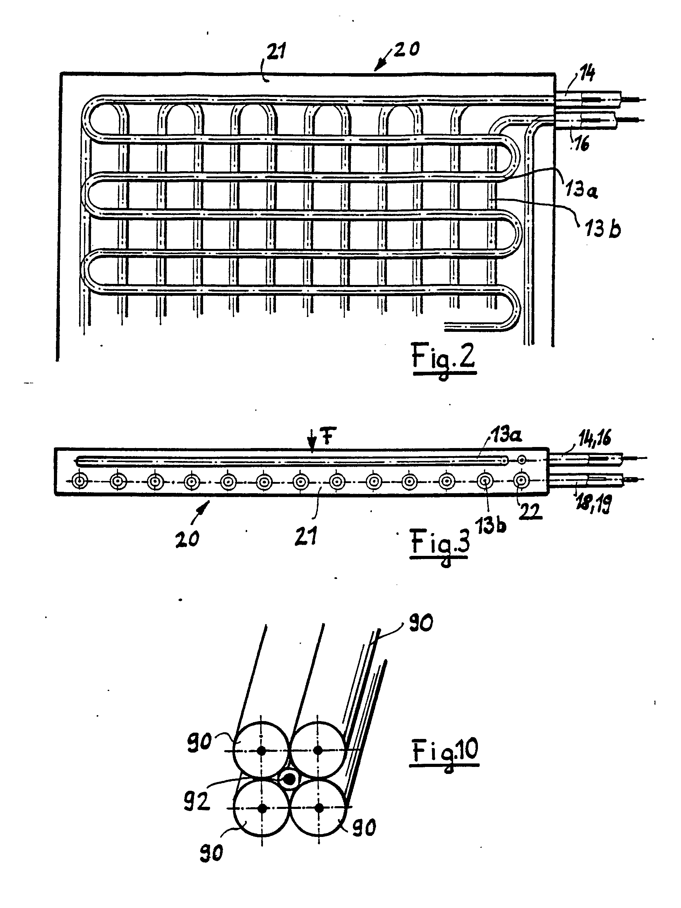

Fig. 2 zeigt ein praktisches Ausführungsbeispiel eines erfindungsgemäßen optischen Sensors 20, der bevorzugt eine flächige Ausführung besitzt, das heißt, bei dem die Höhe oder Dicke wesentlich geringer ist als die Längen- und Breitendimension.

Der Sensor 20 besteht aus einer Schicht aus kraftübertragendem Material, bevorzugt elastomerem Material, in dem ein Meßlichtwellenleiter 13a mäanderförmig als obere Lage 23 eingebettet ist. Wie aus Fig. 3 ersichtlich, ist dann der Bezugslichtwellenleiter 13b in Röhren 22 ebenfalls mäanderförmig in der Schicht 21 geführt. Der Referenzlichtwellenleiter 13b ist somit kräftefrei angeordnet. Lichtwellenleiterkabel 14, 16 verbinden den Meßlichtwellenleiter 13a mit den Kopplern 4a bzw. 4b der Fig. 1. In gleicher Weise ist der Referenzlichtwellen-leiter 13b über Lichtleiterkabel 18, 19 an die Koppler 4a, 4b angeschlossen.

Aus den Fig. 2 und 3 ergibt sich, daß der Meßlichtwellenleiter 13a auf Grund der mäanderförmigen Führung eine erhebliche Länge aufweist, die zwischen Bruchteilen von Metern und einigen km liegen kann. Der Referenzlichtwellenleiter 13b besitzt bevorzugt, jedoch nicht notwendigerweise die gleiche Länge wie der Meßwellenleiter 13a. Bei Einwirkung einer Kraft F auf die Oberfläche der Schicht 21 wird diese Kraft vollständig auf den Meßlichtwellenleiter 13a übertragen und das in ihm sich fortpflanzende, einwellige Licht wird in seiner Phase deutlich gegenüber dem Licht im Referenzlichtwellenleiter 13b verschoben. Diese phasendifferenz läßt sich äußerst genau feststellen, so daß sich eine sehr Auflösung ergibt.

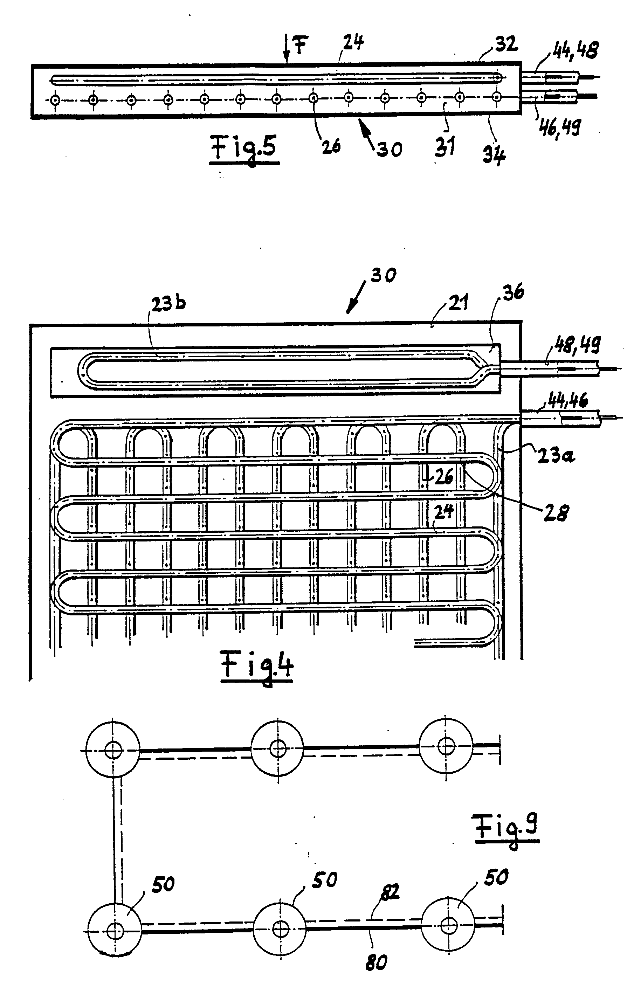

Die Fig. 4 und 5 zeigen eine weitere Ausführungsform eines erfindungsgemäßen optischen Sensors 30, bei dem eine Schicht 21 aus elastomerem Material zwischen zwei Stahlplatten 32, 34 angeordnet ist, so daß sich eine gleichmäßige Verteilung einer auf die obere Stahlplatte 32 wirkenden Kraft F in der Schicht 31 ergibt.

Abweichend von dem Ausführungsbeispiel der Fig. 2 und 3 ist der Referenzlichtleiter 23b in einem größeren Hohlraum 36 getrennt von dem Meßlichtwellenleiter 23a seitlich von diesem angeordnet. Ferner wurde der Meßlichtwellenleiter 23a in zwei übereinander angeordneten sich kreuzenden Lagen 24 und 26 mäanderförmig gelegt, wodurch eine weitere Verlängerung des Meßlichtwellenleiters 23a möglich ist. Dabei kann der Abstand der beiden Lagen so gewählt sein, daß keine Lichtkopplung zwischen ihnen auftritt. Alternativ dazu könnte eine der Lagen 24, 26 auch getrennt herausgeführt sein und nur einen derartigen Abstand von der anderen Lage haben, daß bei Krafteinwirkung eine Lichtauskopplung aus der eigentlichen Meßlichtwellenleiterlage in die andere Lage erfolgt, die dann zur Lokalisierung der Krafteinwirkung auf die Schicht 21 verwendet werden kann. Bei einer derartigen Anordnung würde die obere Stahlplatte 32 bevorzugt entfallen.

Wie bei dem Ausführungsbeispiel der Fig. 2 und 3 erfolgt ein entsprechender Anschluß an die Koppler 4a und 4b über Lichtleiterkabel 44, 46, 48, 49.

Ist der Meßlichtwellenleiter und der Referenzlichtwellenleiter nicht gleich lang, dann muß dies selbstverständlich bei der elektronischen Auswertung im Prozessor 6 entsprechend berücksichtigt werden.

Durch Einbettung der Meß- und Referenzlichtwellenleiter in die elastomere Schicht lassen sich superflache Meßstrecken, ähnlich Fördergurten oder dergleichen mit Verfahren herstellen, wie sie auch bei der Herstellung von Fördergurten aus elastomerem Material verwendet werden.

Da der Referenzlichtwellenleiter in oder in der Nähe der elastomeren Schicht, etwa in der druckfreien Kammer 36 oder in den beispielsweise durch Rohre gebildeten Öffnungen 26 geführt ist, werden Temperaturänderungen wirksam kompensiert.

Bisher wurde angenommen, daß das kraftübertragende Material, in dem die Lichtwellenleiter eingebettet sind, ein elastomeres Material ist, wobei dieses bevorzugt blasenfrei hergestellt sein sollte. Dies kann entweder durch Aushärtung des elastomeren Materials im Vakuum oder durch Zentrifugalgießen erreicht werden, wie dies nachstehend noch näher erläutert wird.

An die Stelle des elastomeren Materials kann auch ein Material von wesentlich größerer Härte treten, wenn dieses die auf die Schicht ausgeübten Kräfte bzw. Drucke vollständig oder zumindest gleichförmig weitergibt. Als ein derartiges Material käme auch Glas in Frage, wobei die bevorzugt aus Glas bestehenden Lichtwellenleiter in eine geschmolzene Glasfritte eingebettet werden, die einen niedrigeren Schmelzpunkt als die Lichtwellenleiter besitzt.

Die Fig. 6 bis 8 zeigen eine weitere Ausführungsform des erfindungsgemäßen optischen Sensors in Anwendung auf eine Kraftmeßzelle, wie sie beispielsweise in der WO-A-86 03 584 beschrieben ist.

Im Inneren eines topfförmigen Gehäuses 52 ist ein Kolben 54 unter Bildung eines engen Ringspaltes 55 geführt. Ein Raum 56 zwischen der Unterseite des Kolbens 54 und dem Boden des Gehäuses 52 ist mit einem elastomeren Material gefüllt, in dem ein Meßlichtwellenleiter 58 eingebettet ist, der mit den Kopplern 4a, 4b (Fig. 1) über Lichtleiterkabel 66, 67 in Verbindung steht.

Ein Bezugslichtwellenleiter 62 ist unabhängig vom Meßlichtwellenleiter 58 untergebracht, beispielsweise in einer an der Unterseite des Gehäuses 52 ausgebildeten Öffnung 60, die mittels einer Deckplatte 64 verschließbar ist. Der Referenzlichtwellenleiter 62 steht wiederum über Lichtleiterkabel 68, 69 mit den Kopplern 4a und 4b in Verbindung.

Der Meßlichtwellenleiter 58 und bevorzugt auch der Referenzlichtwellenleiter 62 können eine erhebliche Länge zwischen Bruchteilen eines Meters und einigen hundert Meter aufweisen. Die Lichtwellenleiter können wiederum meanderförmig ein- oder mehrlagig geführt sein. Eine alternative Form wäre eine spiralförmige, bifilare Ausbildung mit umgebogenem inneren Ende.

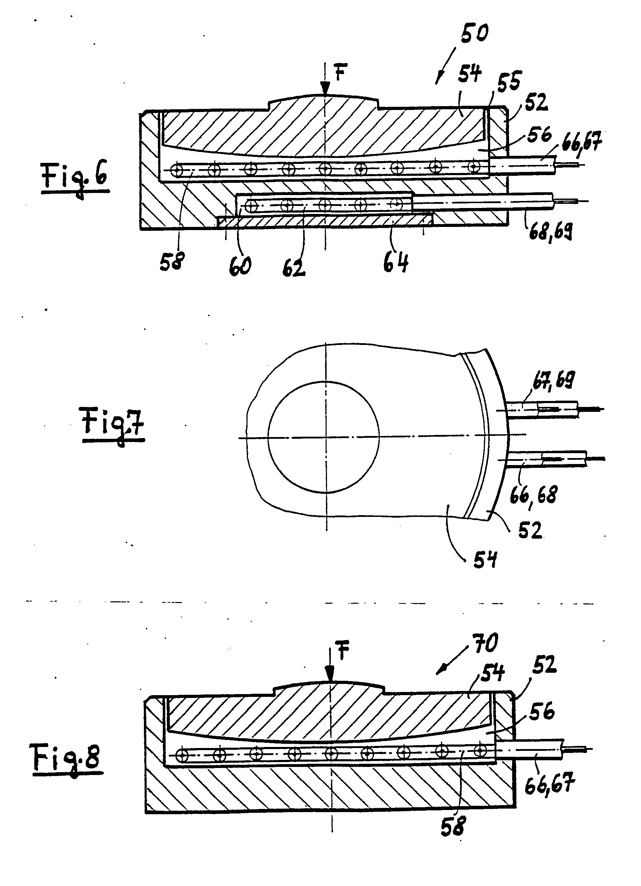

Fig. 8 zeigt eine gegenüber der Ausführungsform nach Fig. 6 modifizierte Ausführungsform eines optischen Sensors 70, bei dem der Referenzlichtwellenleiter weggelassen ist. Dies ist dann möglich, wenn eine Temperaturkompensation nicht erforderlich ist und zur Messung ein Impulsverfahren, etwa in einem vielwelligen Lichtwellenleiter verwendet wird.

Fig. 7 zeigt die Draufsicht auf die Ausführungsformen nach Fig. 6 und 8, zur Erläuterung der Herausführung der Lichtleiterkabel 66, 67, 68, 69.

Das bei den verschiedenen Ausführungsbeispielen verwendete elastomere Material kann bevorzugt Silikon-Kautschuk sein. Weitere verwendbare Stoffe sind in der genannten WO-A-86 03 584 angegeben. Bei der Herstellung der erfindungsgemäßen Sensoren können die in dieser Veröffentlichung erläuterten Verfahren verwendet werden, wobei die Aushärtung des elastomeren Materials entweder in Vakuum erfolgt oder ein Zentrifugalgießen verwendet wird. Hierdurch läßt sich blasenfreies elastomeres Material herstellen, das Kräfte bzw. Drucke vollständig auf den Meßlichtwellenleiter 58 überträgt.

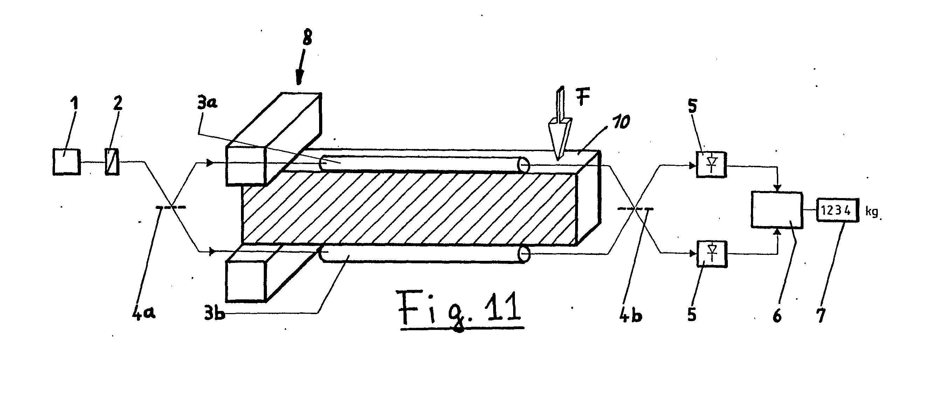

Fig. 9 zeigt eine Reihenschaltung mehrerer in Abstand zueinander angeordneter Kraftmeßzellen mit optischem Sensor gemäß den Fig. 6 bis 8, wobei die Lichtwellenleiter durch Lichtleiterkabel 80 bzw. 82 in Reihe geschaltet sind. Anfang und Ende werden wieder mit den Kopplern 4a, 4b (Fig. 1) verbunden. Auf diese Weise läßt sich ein ausgedehnter Kraftmeßteppich herstellen.

Fig. 10 zeigt einen Lichtwellenleiteraufbau, gemäß dem mindestens drei, im Ausführungsbeispiel vier Lichtwellenleiter 90 zueinander parallel verlaufend zusammengeschmolzen sind. In dem sich in der Mitte ergebenden Hohlraum kann dann der Referenzlichtwellenleiter 92 angeordnet werden.

Eine derartige Lichtleiterkombination kann dann an Stelle der Meßlichtwellenleiter meanderförmig oder spiralförmig oder dergleichen in die elastomere Schicht eingebettet werden. Die Meßlichtwellenleiter 90 werden dann miteinander in Reihe geschaltet und es besteht eine exakte Längenbeziehung zwischen den Meßlichtwellenleitern 90 und dem Referenzlichtwellenleiter 92.

Die äußeren Meßlichtwellenleiter 90 werden durch Druck belastet, was zu elastischen Spannungen in Längs- und Querrichtung in den Meßlichtwellenleitern 90 führt, wodurch sich der Brechungsindex in diesen Lichtquellenleitern ändert. Der Bezugswellenleiter 92 wird von den Druckänderungen nicht beeinflußt.

Obwohl in Zusammenhang mit Fig. 1 optische Sensoren mit einwelligen Lichtleitern beschrieben wurden, können beliebige andere Lichtwellenleiter wie Side-Hole-Fasern, mit Draht umwickelte Fasern, gedrehte Fasern mit druckentlasteter Referenzfaser zum Einsatz kommen. Das optische Meßprinzip ist auch nicht auf ein Zweistrahl-Interferometer nach Mach-Zehnder beschränkt.

Wie bei Dehnungsmeßstreifen-Vorrichtungen üblich, kann auch bei den vorstehend beschriebenen optischen Sensoren zum Abgleich zwischen Meßlichtwellenleiter und Referenzlichtwellenleiter an einer geeigneten Stelle ein bevorzugt ablängbarer Lichtwellenleiterabschnitt angeordnet sein, der zum Beispiel zur Nullkompensation dem einen oder anderen Lichtwellenleiter in Reihe geschaltet wird.

Von Bedeutung für die Erfindung ist, daß sich die Lichtwellenleiter auf einfache Weise in Form eines Gewebes in dem elastomeren Material einbetten lassen, etwa mit Verfahren wie sie bei der Herstellung von Fördergurten oder dergleichen bekannt sind. Die Lichtwellenleiterpakete können auch auf einer blattförmigen Unterlage aufgebracht sein, die dann in das elastomere Material eingebettet wird. Die Meanderführung kann beispielsweise mittels Webtechnik erreicht werden, das heißt, daß beispielsweise mit Schuß und Kette gearbeitet wird.

Die Figuren 11 bis 13 zeigen eine Modifikation des Interferometers nach Fig. 1. Hierbei ist abweichend der Meßlichtwellenleiter 3a an einem elastisch verformbaren Körper 10 angebracht, der in einer Halterung 8 einseitig eingespannt ist.

Bei der erfindungsgemäßen Anordnung ist der Meßlichtwellenleiter 3a auf der Oberseite des Körpers 10 angeordnet, während sich der Referenzlichtwellenleiter 3b auf dessen Unterseite befindet. Dies ist abweichend von der an sich bekannten Anordnung, bei der der Referenzlichtwellenleiter 3b unbeeinflußt von der auf den Körper 10 wirkenden Kraft F ist.

Unter der Einwirkung dieser Kraft F biegt sich der Körper 10 durch, wodurch der Meßlichtwellenleiter 3a gedehnt und der Referenzlichtwellenleiter 3b gestaucht wird. Hierdurch ergibt sich eine Phasenverschiebung zwischen den Lichtanteilen, die durch die beiden Lichtwellenleiter 3a, 3b laufen. Diese Phasenverschiebung wird in den Einrichtungen 5, 6 festgestellt. Aus der Phasenverschiebung wird ein entsprechender Kraftwert berechnet und mittels der Anzeige 7 angezeigt.

Wie bereits erwähnt, kann der Referenzlichtwellenleiter 3b auch unbeeinflußt von der Kraft F, das heißt getrennt vom Körper 10 angeordnet werden. Andererseits bietet sich bei der Fig. 11 gezeigten Lösung die Möglichkeit, die Dehnung bzw. Stauchung der Lichtwellenleiter 3a und 3b getrennt auszuwerten und ähnlich wie bei dem üblichen Widerstandsmeßverfahren eine Differenzbildung vorzunehmen. Der Referenzlichtwellenleiter 3b kann auch entfallen, wenn eine Temperaturkompensation nicht erforderlich ist oder elektronisch im Prozessor 6 vorgenommen wird. In diesem Falle erfolgt die Lichtübertragung mittels eines Zeitmeßverfahrens, bei dem die Laufzeit von Lichtimpulsen durch den Meßlichtwellenleiter 3a festgestellt wird.

In Fig. 11 ist lediglich ein gerader Lichtwellenleiterabschnitt für den Meß- und den Referenzlichtwellenleiter 3a, 3b gezeigt. Erfindungsgemäß werden jedoch Lichtwellenleiter von erheblicher Länge verwendet, die im Bereich von Bruchteilen von Metern bis zu einigen Kilometern liegen können.

Der Körper 10 kann bei üblichen Dehnungsmeßstreifenvorrichtungen eine Metallfeder sein oder aus Glas, Keramik, nichtkriechendem Kunststoff oder Polymerbeton bestehen. Wesentlich für die Erfindung ist die Anbringung der Lichtwellenleiter 3a, 3b auf dem Körper 10. Dies erfolgt durch Einbettung der Lichtwellenleiter in einer Glasmasse oder -fritte, deren Schmelzpunkt niedriger liegt als derjenige der Lichtwellenleiter 3a, 3b.

Bei der Herstellung des erfindungsgemäßen optischen Sensors werden der bzw. die Lichtwellenleiter 3a, 3b entsprechend dicht meanderförmig in Zug- bzw. Dehnrichtung, bei linearer Beanspruchung gegebenenfalls bifilar spiralförmig, in eine geschmolzene Glasmasse oder -fritte eingebettet, die auf dem Körper 10 aufgebracht ist bzw. wird. Die Lichtwellenleiter können dabei nach Art eines Gewebes vorliegen oder auf einem Glasgerüst aufgebracht sein. Alternativ dazu, können die Lichtwellenleiter auf der Oberfläche des Körpers 10 aufgebracht und mittels Glas dort verschmolzen werden. Auch wäre es möglich, die Lichtwellenleiter auf einer blattförmigen Unterlage aufzubringen, die vorzugsweisee aus einem sich beim Schmelzvorgang verflüchtigenden Material besteht.

Die Herstellung kann entweder in einem Verfahrensvorgang ablaufen, bei dem die Lichtwellenleiter etwa aus einem Glasgerüst auf dem Körper 10 angeordnet und dann mit geschmolzener Glasmasse eingebettet werden. Diese besitzt natürlich einen niedrigeren Schmelzpunkt als die Lichtwellenleiter.

Die Herstellung kann aber auch schichtenweise erfolgen, nämlich unter Anbringen einer ersten Glasschicht auf dem Körper 10, Anordnen der Lichtwellenleiter auf der Glasschicht und Abdecken der Lichtwellenleiter mittels einer zweiten Glasmassenschicht.

Besonders vorteilhaft ist ein Herstellungsverfahren, bei dem der Körper 10 aus dem nichtkriechenden Material, vorzugsweise Glas gegossen wird, wobei dann die Lichtleiterfäden, etwa auf einem Glasgerüst in der Gießform für den Körper 10 angeordnet und beim Gießvorgang bereits miteingegossen werden, so daß sich eine integrierte Einheit ergibt. Voranstehend wurde als Einbettungsmasse vorwiegend Glas angegeben. Es kommen jedoch auch andere Materialien in Frage, sofern diese kein "Kriechen" unter Last aufweisen. Ein Beispiel dafür wäre ein Zweikomponenten-Gießharz.

Nachdem anhand von Fig. 11 die prinzipielle Arbeitsweise eines erfindungsgemäßen optischen Kraftmeßsensors erläutert wurde, seien nachstehend Möglichkeiten zur technischen Realisierung angegeben.

Prinzipiell kann der erfindungsgemäße optische Kraftmeßsensor in gleicher Weise ausgebildet werden wie bekannte Dehnungsmeßstreifen-Wägezellen. Hierzu wird beispielsweise verwiesen auf den VDI-Bericht Nr. 312, 1978 von D. Meißner und R. Süß "Beitrag zur Prüfung von Dehnungsmeßstreifen-Wägezellen auf Eignung zum Einsatz in eichfähigen, elektromechanischen Waagen".

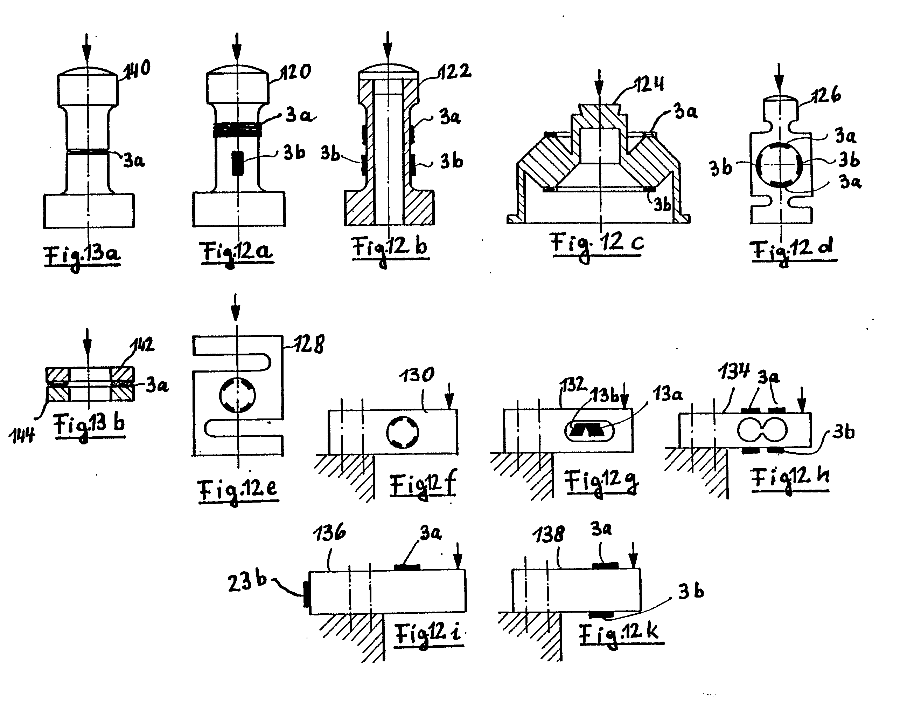

Die Figuren 12a bis 12k zeigen die in diesem Bericht angegebenen Ausführungsbeispiele. So zeigt Fig. 12a einen Stempelkraftgeber 120 von beispielsweise zylinderförmiger Ausbildung, bei dem der eine Lichtwellenleiter 3a vorzugsweise vielfach um den Umfang herumgewickelt ist, während der Lichtwellenleiter 3b beispielsweise meanderförmig in Stauchrichtung auf dem Körper aufgebracht ist.

Fig. 12b zeigte einen ähnlichen Stempelkraftgeber 122 in Form einer Hohlwelle mit aufgewickeltem Lichtleiter 3a und zwei auf gegenüberliegenden Seiten des Körpers in Stauchrichtung angebrachten Lichtwellenleitern 3b, die bevorzugt in Reihe geschaltet sind.

Fig. 12c zeigt einen Torsionsring 124 mit beispielsweise auf der Spitze stehendem quadratischen Querschnitt, wobei der Lichtwellenleiter 3a im Bereich der oberen Ringkante und der Lichtwellenleiter 3b im Bereich der unteren Ringkante angeordnet ist.

Die Fig. 12d und 12e zeigen wieder Stempelkraftgeber 126 bzw. 128, wobei in diesem Falle in einer senkrecht zur Krafteinleitungsrichtung verlaufenden zylindrischen Öffnung Lichtleiterpaare 3a und 3b in Zug- bzw. Stauchrichtung aufgebracht sind.

Fig. 12f veranschaulicht einen balkenförmigen einseitig eingespannten Körper 130 mit einer zylindrischen Öffnung, in der wie beim Ausführungsbeispiel der Fig. 2d Lichtwellenleiterpaare 3a und 3b angeordnet sind.

Fig. 12g stellt schematisch einen balkenförmigen Scherkraftgeber 132 dar, bei dem in einer horizontal aufgeweiteten Öffnung Lichtwellenleiter 13a und 13b unter einem Winkel von 45° gegenüber der Krafteinleitungsrichtung und zueinander im rechten Winkel versetzt meanderförmig angeordnet sind.

Fig. 12h zeigt einen balkenförmigen Geber nach Art eines Doppellenkers, bei dem im Balken 134 horizontal nebeneinander zwei zylindrische Öffnungen vorgesehen sind. Die Lichtwellenleiter 3a bzw. 3b sind paarweise gegenüberliegend auf der Ober- bzw. Unterseite des Balkens 134 an den jeweils dünnsten Stellen angeordnet.

Bei einem weiteren balkenförmigen Dehungsmeßstreifengeber 136 ist nur der Meßlichtwellenleiter 3a unter Krafteinwirkung auf der Ober- (oder Unterseite) des Balkens vorzugsweise meanderförmig in Zug- bzw. Stauchrichtung aufgebracht, während ein Referenzlichtwellenleiter 23b auf der Rückseite des Balkens ohne Krafteinfluß angeordnet ist.

Fig. 12k zeigt schließlich einen balkenförmigen Dehnungsmeßstreifengeber 138 mit den auf der Ober- und der Unterseite angeordneten, vorzugsweise meanderförmig geführten Lichtwellenleitern 3a bzw. 3b.

Bei allen Ausführungsformen lassen sich die Lichtwellenleiter gemäß dem erfindungsgemäßen Verfahren aufbringen und einbetten.

Zur Auswertung der Veränderung der Lichtübertragungs-Eigenschaften der Lichtwellenleiter können die verschiedensten bekannten Verfahren verwendet werden, auf die bereits eingangs hingewiesen wurde.

Die Fig. 13a und 13b zeigen zwei andersartige Ausführungsformen von erfindungsgemäßen optischen Kraftmeßsensoren. Bei dem Ausführungsbeispiel nach Fig. 13a ist ein Stempelkraftgeber 140 horizontal durchgeschnitten und mit einer Zwischenlage versehen, in der der Lichtwellenleiter 3a eingebettet ist. Neben einer meanderförmigen Leiterführung könnte bei diesem Ausführungsbeispiel bevorzugt eine bifilare spiralförmige Anordnung gewählt werden, die aus einem einzigen Lichtwellenleiter besteht, der in der Mitte umgebogen ist. Es besteht auch die Möglichkeit zwei Lagen mit zwei unabhängigen Lichtwellenleitern mit sich senkrecht überlagernder Meanderführung zu verwenden. Die Lichtwellenleiter sind wiederum in Glas eingebettet oder aber in diesem Falle in einem möglichst blasenfreien elastomeren Material, das die auf den Stempel ausgeübte Kraft vollständig auf den bzw. die Lichtwellenleiter 3a überträgt.

Fig. 13b zeigt eine ähnlich funktionierende Ausführungsform, bei der der Lichtwellenleiter 3a zwischen zwei Scheiben, beispielsweise Unterlagsscheiben 142, 144 angeordnet ist. Mit einer derartigen Anordnung könnte das Anziehen von Schrauben auf einen gewünschten Druck bestimmt werden.

Für die Ausführungsbeispiele der Figuren 13a und 13b könnte auch ein kombinierter Lichtwellenleiter gemäß Fig. 10 Verwendung finden.

Wie bei Dehnungsmeßstreifen-Vorrichtungen üblich, kann auch bei den vorstehend beschriebenen optischen Sensoren zum Abgleich zwischen Meßlichtwellenleiter und Referenzlichtwellenleiter an einer geeigneten Stelle ein bevorzugt ablängbarer Lichtwellenleiterabschnitt angeordnet sein, der zum Beispiel zur Nullkompensation dem einen oder anderen Lichtwellenleiter in Reihe geschaltet wird.

Abschließend sei noch erwähnt, daß sich die Lichtwellenleiteranordnung oder -pakete auf einfache Weise mittels Lichtleiterkabeln oder Weiterführung des Lichtwellenleiters in Reihe schalten lassen. Somit können beispielsweise mehrere in Abstand zueinander angeordnete Sensoren optisch miteinander in Reihe geschaltet werden.

Selbstverständlich kann mit dem optischen Krafmeßsensor auch ein Druck gemessen werden. Hierzu wird der Körper 10 beispielsweise als Membran ausgebildet, auf deren Flächen die Lichtwellenleiter in erfindungsgemäßer Weise aufgebracht werden.

**Patentansprüche**

1. Kraftmeßsensor mit einem faserartigen Lichtwellenleiter, der in einer Schicht aus druck- oder kraftübertragendem Material eingebettet ist und unter dem Einfluß einer Kraft oder eines Druckes seine Lichtübertragungseigenschaften ändert, wobei diese Änderung zur Messung der Kraft oder des Druckes herangezogen wird, dadurch gekennzeichnet, daß die Schicht (21) zumindest auf der Oberseite mit einer steifen Krafteinleitungsplatte (32) abgedeckt ist, die fest an der Schicht (21) haftet.

2. Kraftmeßsensor mit einem faserartigen Lichtwellenleiter, der in einer Schicht aus druck- oder kraftübertragendem Material eingebettet ist und unter dem Einfluß einer Kraft oder eines Druckes seine Lichtübertragungseigenschaften ändert, wobei diese Änderung zur Messung der Kraft oder des Druckes herangezogen wird, dadurch gekennzeichnet, daß der Lichtwellenleiter (3a; 13a) auf einem elastisch verformbaren Meßkörper (120, 122, 124, 126, 128, 132, 134, 136, 138, 140, 142) unter Einbettung in einem unter Krafteinwirkung nichtkriechenden Material aufgebracht ist.

3. Kraftmeßsensor nach Anspruch 1 oder 2, dadurch gekennzeichnet, daß ein Referenzlichtwellenleiter (3b, 13b; 23b; 62) unbeeinflußt von der Kraft oder dem Druck in der Nähe des Lichtwellenleiters (3a; 13a; 23a; 58) angeordnet ist.

4. Kraftmeßsensor nach Anspruch 3, dadurch gekennzeichnet, daß der Referenzlichtwellenleiter (3b; 13b) in der Schicht (10; 21) in rohrförmigen Durchführungen (12; 22) druckfrei in einer anderen Höhenlage geführt ist als der Lichtwellenleiter (3a; 13a).

5. Kraftmeßsensor nach Anspruch 3 oder 4, dadurch gekennzeichnet, daß der Referenzlichtwellenleiter (23b) in einem in der Schicht (21) vorgesehenen druckfreien Raum (36) geführt ist.

6. Kraftmeßsensor nach Anspruch 1, dadurch gekennzeichnet, daß der Lichtwellenleiter (58) in elastomerem Material eingebettet ist, das sich im Inneren eines topfförmigen Gehäuses (52) befindet.

7. Kraftmeßsensor nach Anspruch 6, dadurch gekennzeichnet, daß die steife Krafteinleitungsplatte (32) als Kolben (54) ausgebildet ist, der mit der Innenwand des topfförmigen Gehäuses (52) einen engen Spalt (55) bildet, der mit elastomerem Material gefüllt ist.

8. Kraftmeßsensor nach Anspruch 6 oder 7, dadurch gekennzeichnet, daß in einer Wand des topfförmigen Gehäuses (52) vorzugsweise der Bodenwand, eine Ausnehmung (60) vorgesehen ist, in der ein Referenzlichtwellenleiter (62) untergebracht ist.

9. Kraftmeßsensoranordnung, dadurch gekennzeichnet, daß sie mehrere Kraftmeßsensoren nach Anspruch 7 oder 8 aufweist, die als Kraftmeßzellen in Abstand zueinander angeordnet sind, wobei ihre Lichtwellenleiter (58) bzw. Referenzlichtwellenleiter (62) in Reihe geschaltet sind.

10. Kraftmeßsensor nach Anspruch 2, dadurch gekennzeichnet, daß der Meßkörper (120-142) aus Metall, Keramik oder Glas, oder Silizium besteht und der Lichtwellenleiter (3a) und gegebenenfalls ein Referenzlichtwellenleiter (3b) mit einer auf dem Meßkörper (120-142) fest haftenden Glasschicht befestigt ist.

11. Kraftmeßsensor nach Anspruch 2, dadurch gekennzeichnet, daß der Meßkörper (120-142) aus gießfähigem nichtkriechenden Material besteht und der Lichtwellenleiter (3a; 13a) und ggf. ein Referenzlichtwellenleiter (3b; 13b; 23b) in den Meßkörper (120-142) miteingeschlossen ist.

12. Kraftmeßsensor nach Anspruch 2, 10 oder 11, dadurch gekennzeichnet, daß der Meßkörper (124) als Torsionsring mit einem auf der Spitze stehenden quadratischen Querschnitt ausgebildet ist, längs dessen einer Ringkante der Lichtwellenleiter (3a) bevorzugt in mehreren Windungen angeordnet ist, wobei ggf. an der gegenüberliegenden Kante der Referenzlichtwellenleiter (3b) in gleicher Weise angeordnet ist.

13. Kraftmeßsensor nach einem der vorhergehenden Ansprüche, dadurch gekennzeichnet, daß der Meßkörper (140) in einer senkrecht zur Krafteinleitungsrichtung verlaufenden Ebene aufgetrennt und mit einer Zwischenschicht versehen ist, in der der Lichtleiter (3a) eingebettet ist.

14. Lichtwellenleiterkombination, insbesondere zur Verwendung mit einem Kraftmeßsensor gemäß einem der vorhergehenden Ansprüche, dadurch gekennzeichnet, daß zumindest drei zueinander parallel verlaufende Lichtwellenleiterfasern (90) miteinander verschmolzen sind und eine Referenzlichtwellenleiterfaser (92) geschützt im Inneren zwischen den genannten, zueinander parallel verlaufenden Lichtleiterfasern (90) verläuft.

15. Verfahren zum Herstellen eines optischen Kraftmeßsensors unter Aufbringen mindestens eines Lichtwellenleiters auf einen elastisch verformbaren Meßkörper, dadurch gekennzeichnet, daß der Lichtwellenleiter in einer Schicht aus Glasmasse mit einem niedrigeren Schmelzpunkt als derjenige des Lichtwellenleiters auf dem Meßkörper aufgeschmolzen wird.

16. Verfahren nach Anspruch 15, dadurch gekennzeichnet, daß der Lichtwellenleiter gewebeartig vorgefertigt oder auf einer Glasgitterstruktur vorbereitet in die Schicht eingebettet wird.

17. Verfahren nach Anspruch 15 oder 16, dadurch gekennzeichnet, daß der Lichtwellenleiter auf dem Meßkörper aufgebracht und dann mit einer Glasmassenschicht abgedeckt wird.

18. Verfahren zum Herstellen eines optischen Kraftmeßsensors unter Anbringen eines Lichtwellenleiters an einem elastisch verformbaren Körper, dadurch gekennzeichnet, daß der Lichtwellenleiter in einer Form für den zu gießenden Meßkörper angeordnet und dann der Meßkörper gegossen wird, so daß der Lichtwellenleiter im Meßkörper selbst miteingegossen ist.

19. Verfahren nach Anspruch 18, dadurch gekennzeichnet, daß der Meßkörper aus nichtkriechendem Material gegossen wird.

20. Verfahren zum Herstellen eines Kraftmeßsensors gemäß Anspruch 6 oder 7, dadurch gekennzeichnet, daß der Lichtwellenleiter in einer Schicht aus elastomerem Material blasenfrei durch Schleuderguß eingegossen wird.

**Revendications**

1. Capteur dynamométrique comprenant un guide d'ondes lumineuses analogue à une fibre qui est noyé dans une couche de matière transmettant la force ou la pression et dont les propriétés de transmission de la lumière sont modifiées sous l'influence d'une force ou d'une pression, cette modification étant utilisée pour mesurer la force ou la pression, caractérisé par le fait que la couche (21) est recouverte, du moins sur sa face supérieure, d'une plaque rigide d'application de la force (32) qui adhère solidement à la couche (21).

2. Capteur dynamométrique comprenant un guide d'ondes lumineuses analogue à une fibre qui est noyé dans une couche de matière transmettant la force ou la pression et dont les propriétés de transmission de la lumière sont modifiées sous l'influence d'une force ou d'une pression, cette modification étant utilisée pour mesurer la force ou la pression, caractérisé par le fait que le guide d'ondes lumineuses (3a; 13a) est posé sur un corps de mesure élastiquement déformable (120, 122, 124, 126, 128, 132, 134, 136, 138, 140, 142) en étant noyé dans une matière qui ne flue pas sous l'effet de la force.

3. Capteur dynamométrique selon la revendication 1 ou 2, caractérisé par le fait qu'un guide d'ondes lumineuses de référence (3b, 13b; 23b; 62) est disposé au voisinage du guide d'ondes lumineuses (3a; 13a; 23a; 58) sans être influencé par la force ou par la pression.

4. Capteur dynamométrique selon la revendication 3, caractérisé par le fait que le guide d'ondes lumineuses de référence (3b; 13b) est guidé dans la couche (10; 21) dans des passages tubulaires (12; 22) sans être soumis à la pression et à une position en hauteur différente de celle du guide d'ondes lumineuses (3a; 13a).

5. Capteur dynamométrique selon la revendication 3 ou 4, caractérisé par le fait que le guide d'ondes lumineuses de référence (23b) est guidé dans un espace non soumis à la pression (36) qui est prévu dans la couche (21).

6. Capteur dynamométrique selon la revendication 1, caractérisé par le fait que le guide d'ondes lumineuses (58) est noyé dans une matière élastomère qui se trouve à l'intérieur d'un logement en forme de cuvette (52).

7. Capteur dynamométrique selon la revendication 6, caractérisé par le fait que la plaque rigide d'application de la force (32) est réalisée sous la forme d'un piston (54) qui forme avec la paroi intérieure du logement en forme de cuvette (52) une fente étroite (55) remplie de matière élastomère.

8. Capteur dynamométrique selon la revendication 6 ou 7, caractérisé par le fait qu'il est prévu dans une paroi du logement en forme de cuvette (52), et de préférence dans sa paroi du fond, un évidement (60) dans lequel est inséré un guide d'ondes lumineuses de référence (62).

9. Arrangement de capteurs dynamométriques, caractérisé par le fait qu'il comporte plusieurs capteurs dynamométriques selon la revendication 7 ou 8 qui sont disposés à distance les uns des autres sous la forme de cellules dynamométriques, leurs guides d'ondes lumineuses (58) ou, respectivement, leurs guides d'ondes lumineuses de référence (62) étant montés en série.

10. Capteur dynamométrique selon la revendication 2, caractérisé par le fait que le corps de mesure (120 - 142) se compose de métal, de céramique ou de verre, ou de silicium, et que le guide d'ondes lumineuses (3a) et, le cas échéant, le guide d'ondes lumineuses de référence (3b) sont fixés par une couche de verre qui adhère solidement au corps de mesure (120 - 142).

11. Capteur dynamométrique selon la revendication 2, caractérisé par le fait que le corps de mesure (120—142) se compose d'une matière apte à la coulée et qui ne flue pas, et que le guide d'ondes lumineuses (3a; 13a) et, le cas échéant, un guide d'ondes lumineuses de référence (3b; 13b; 23b) sont incorporés au corps de mesure (120—142).

12. Capteur dynamométrique selon la revendication 2, 10 ou 11, caractérisé par le fait que le corps de mesure (124) est réalisé sous la forme d'une bague de torsion à section transversale en forme de carré posé sur une pointe, le long de l'un des bords annulaires de laquelle est disposé le guide d'ondes lumineuses (3a) qui comporte de préférence plusieurs spires, le guide d'ondes lumineuses de référence (3b) étant disposé le cas échéant de la même manière sur le bord opposé.

13. Capteur dynamométrique selon l'une des revendications précédentes, caractérisé par le fait que le corps de mesure (140) est divisé selon un plan qui s'étend perpendiculairement à la direction d'application de la force, et qu'il est muni d'une couche intercalaire dans laquelle est noyé le guide d'ondes lumineuses (3a).

14. Combinaison de guides d'ondes lumineuses, destinée en particulier à être utilisée avec un capteur dynamométrique selon l'une des revendications précédentes, caractérisée par le fait qu'au moins trois fibres optiques (90) qui s'étendent parallèlement entre elles sont réunies entre elles par fusion, et qu'une fibre optique de référence (92) s'étend en étant protégée à l'intérieur de l'espace compris entre lesdites fibres optiques (90) qui s'étendent parallèlement entre elles.

15. Procédé pour fabriquer un capteur dynamométrique optique en posant au moins un guide d'ondes lumineuses sur un corps de mesure élastiquement déformable, caractérisé par le fait que le guide d'ondes lumineuses est déposé par fusion sur le corps de mesure en étant noyé dans une couche d'une fritte de verre dont le point de fusion est inférieur à celui du guide d'ondes lumineuses.

16. Procédé selon la revendication 15, caractérisé par le fait que le guide d'ondes lumineuses est noyé dans la couche en étant préfabriqué en forme de tissu ou préparé sur une structure de grille en verre.

17. Procédé selon la revendication 15 ou 16, caractérisé par le fait que le guide d'ondes lumineuses est posé sur le corps de mesure et recouvert ensuite d'une couche de fritte de verre.

18. Procédé pour fabriquer un capteur dynamométrique optique en fixant un guide d'ondes lumineuses sur un corps élastiquement déformable, caractérisé par le fait que le guide d'ondes lumineuses est disposé dans un moule destiné au corps de mesure à couler, et que le corps de mesure est ensuite coulé, de sorte que le guide d'ondes lumineuses est incorporé par coulée dans le corps de mesure lui-même.

19. Procédé selon la revendication 18, caractérisé par le fait que le corps de mesure est coulé à partir d'une matière qui ne flue pas.

20. Procédé pour fabriquer un capteur dynamométrique selon la revendication 6 ou 7, caractérisé par le fait que le corps de mesure est coulé sans soufflures par coulée centrifuge dans une couche en matière élastomère.

## Claims

1. Force measuring sensor including a fibre-type light wave guide embedded in a layer of pressure or force transmitting material and changing its light transmitting characteristics in response of the influence of a force or pressure the change being used for measuring the force or pressure, characterized in that the layer (21) is covered at least on its upper side with a rigid force introduction plate (32) fixedly adhering to the layer (21).

2. Force measuring sensor including a fibre-type light wave guide embedded in a layer of pressure or force transmitting material and changing its light transmitting characteristics in response of the influence of a force or pressure the change being used for measuring the force or pressure, characterized in that the light wave guide (3a; 13a) is applied to an elastically deformable measuring body (120, 122, 124, 126, 128, 132, 134, 136, 138, 140, 142) by embedding in a material which is non-creeping upon force application.

3. Force measuring sensor of claim 1 or 2, characterized in that a reference light wave guide (3b, 13b; 23b; 62) is arranged close to the light wave guide (3a; 13a; 23a; 58) without influence by the force or pressure.

4. Force measuring sensor of claim 3, characterized in that the reference light wave guide (3b; 13b) extends in the layer (10; 21) in tubelike passages (12; 22) pressure-free in a different height level than the light wave guide (3a; 13a).

5. Force measuring sensor of claim 3 or 4, characterized in that the reference light wave guide (23b) extends in a pressure-free space (36) provided in the layer (21).

6. Force measuring sensor of claim 1, characterized in that the light wave guide (58) is embedded in an elastomeric material provided in the interior of a potlike housing (52).

7. Force measuring sensor of claim 6, characterized in that the rigid force introduction plate (32) is formed as a piston (54) forming a narrow gap (55) with the inner wall of the potlike housing (52) the gap being filled with elastomeric material.

8. Force measuring sensor of claim 6 or 7, characterized in that a wall of the potlike housing (52) preferably the bottom wall is provided with a recess (60) for housing the reference light wave guide (62).

9. Force measuring sensor arrangement, characterized in that there are provided several force measuring sensors according to claim 7 or 8 arranged as force measuring cells in spaced relationship to each other with their light wave guides (58) and their reference light wave guides (62), respectively, being series-connected.

10. Force measuring sensor of claim 2, characterized in that the measuring body (120-142) is formed of metal, ceramic, or glass, or silicone and that the light wave guide (3a) and, if applicable, a reference light wave guide (3b) is (are) fixed to the measuring body (120-142) by a glass layer strongly adhering thereto.

11. Force measuring sensor of claim 2, characterized in that the measuring body (120-142) is formed of mouldable non-creeping material and the light wave guide (3a, 13a) and, if applicable, a reference light wave guide (3b; 13b; 23b) is incorporated into the measuring body (120-142).

12. Force measuring sensor of claim 2, 10, or 11, characterized in that the measuring body (124) is formed as a torsion ring of squarelike cross section standing at its corner, the light wave guide (3a) extending along a ring edge thereof, preferably in several windings, if applicable, the reference light wave guide (3b) being arranged at the opposite edge in a similar manner.

13. Force measuring sensor of any preceding claim characterized in that the measuring body (140) is split in a plane extending perpendicular to the force introduction direction and is provided with an intermediate layer having the light wave guide (3a) embedded therein.

14. Light wave guide combination in particular for use with a force measuring sensor according to any of the preceding claims, characterized in that at least three light wave guide fibres (90) extending in parallel to each other are molten together and that a reference light wave guide fibre (92) extends protected in the interior between the said light guide fibres (90) extending parallel to each other.

15. Method of manufacturing an optical force measuring sensor by applying at least one light wave guide onto an elastically deformable measuring body, characterized in that the light wave guide is molten onto the measuring body in a layer of a glass mass having a lower melting point than that of the light wave guide.

16. Method of claim 15, characterized in that the light wave guide is prefabricated in a web-type manner or is embedded into the layer on a glass grid structure.

17. Method of claim 15 or 16, characterized in that the light wave guide is applied to the measuring body and then covered with a glass mass layer.

18. Method of manufacturing an optical force measuring sensor by applying a light wave guide onto an elastically deformable body, characterized in that the light wave guide is arranged in a mould for the measuring body to be moulded and that then the measuring body is moulded such that the light wave guide is moulded-in into the measuring body as such.

19. Method of claim 18, characterized in that the measuring body is moulded of non-creeping material.

20. Method for manufacturing a force measuring sensor according to claim 6 or 7, characterized in that the light wave guide is moulded bubble-free within a layer of elastomeric material by centrifugal moulding.

EP 0 342 192 B1

## Fig.1

21        20        14

16

13a

13b

Fig.2

↓F        13a        14,16

20        21        22        18,19

20        Fig.3        13b

90

90

92

Fig.10

90        90

90

2

_Fig.5_

_Fig.4_

_Fig.9_

Fig.6

Fig.7

Fig.8

Fig. 11

EP 0 342 192 B1

Fig. 12 d
Fig. 12 h
Fig. 12 c
Fig. 12 g
Fig. 12 k
Fig. 12 b
Fig. 12 f
Fig. 12 i
Fig. 12 a
Fig. 12 e
Fig. 13 a
Fig. 13 b